# EUROPÄISCHE PATENTANMELDUNG

(11) **EP 4 790 078 A1**
(43) Veröffentlichungstag der Anmeldung: **12.08.2026**
(21) Anmeldenummer: 25157263.2
(22) Anmeldetag: 11.02.2025
(51) Int. Cl.: C08G 18/79, B32B 27/00, C09J 175/04

(54) **VERKLEBUNGEN MIT ERHÖHTER TEMPERATURBESTÄNDIGKEIT MITTELS VERNETZTER THERMOPLASTISCHER POLYURETHANE**

(71) Anmelder: Covestro Deutschland AG, 51373 Leverkusen (DE)
(72) Erfinder: Achten, Dirk, 51375 Leverkusen (DE); Schuster, Fabian, 51375 Leverkusen (DE); Fischer, Anne, 53947 Nettersheim (DE); Tillack, Joerg, 42699 Solingen (DE); Fait, Thomas, 51063 Köln (DE)
(74) Vertreter: Levpat

(57) **Zusammenfassung**

Die vorliegende Erfindung betrifft ein Verfahren Herstellung von verklebten Verbundmaterialien mit erhöhter Temperaturbeständigkeit dadurch gekennzeichnet, dass a) ein thermoplastisches Polyurethan mit einem Schmelzpunkt ≥ 40°C und ≤ 150°C und einem Glasübergangspunkt < 0°C als Klebstoff eingesetzt wird und b) dieser Klebstoff vor der Verklebung durch eine chemische Reaktion umgesetzt wird und wobei der vernetzte Polyurethanschmelzklebstoff einen Gelpunkt ermittelt nach der in der Beschreibung dargestellten Methode von höchstens 260 °C aufweist, sowie die durch das Verfahren erhältlichen Verbundmaterialien.

## Beschreibung

Die Erfindung betrifft ein Verfahren zur Herstellung von verklebten Verbundmaterialien mit erhöhter Temperaturbeständigkeit und die durch das Verfahren erhältlichen Verbundmaterialien.

Als Klebstoff werden häufig thermoplastische Polymere eingesetzt, die in gelöster Form oder als Schmelze auf ein erstes Substrat aufgetragen und anschließend getrocknet oder abgekühlt werden. Danach liegen sie entweder direkt oder nach Wärmeaktivierung klebrig vor. Ein weiteres Substrat kann dann mit dem ersten Substrat durch Verpressen verbunden werden. Das zweite Substrat kann dabei entweder unbeschichtet oder ebenfalls mit einer Klebeschicht versehen worden sein. Vielfach werden als Klebstoff Polyurethane eingesetzt.

Es ist für viele Anwendungen wünschenswert, dass die Verklebung eine hohe Temperaturbeständigkeit aufweist, um eine Trennung der Substrate in der Wärme zu vermeiden.

Der Stand der Technik lehrt, dass zur Erreichung einer hohen Temperaturbeständigkeit von Polyurethanschmelzklebstoffen (im Folgenden auch vereinfacht als Klebstoffe, Schmelzklebstoffe oder Polyurethanklebstoffe bezeichnet) oberhalb der Schmelztemperatur eine Vernetzung des Klebstoffes förderlich ist. Dazu werden typischerweise 1-Komponenten (1K) Klebstoffformulierungen enthaltend latente Vernetzer oder 2-Komponenten (2K) Formulierungen, wobei eine der Komponenten einen Vernetzer enthält, eingesetzt. Unter 2K Formulierungen werden also unvernetzte Polyurethanklebstoffe in Kombination mit geeigneten bei Raumtemperatur (23°C) reaktiven Vernetzern, durch Temperatur aktivierten oder durch aktinische Strahlung aktivierbaren Vernetzern, oder durch oxidative Reaktion wirksame Vernetzer verstanden.

Sowohl bei den 1-Komponenten-latent-reaktiven Klebstoffformulierungen als auch bei den 2-Komponenten Klebstoffformulierungen wird davon ausgegangen, dass eine Vernetzung des Polyurethanschmelzklebstoffs erst während oder nach der Verklebung stattfindet. Die Zeit, in der diese Polyurethanschmelzklebstoffs nach Zugabe eines latenten oder reaktiven Vernetzers ohne Vernetzung sicher verarbeitet oder gelagert werden können, wird allgemein als Topfzeit definiert. Nach Ablauf der limitierten Topfzeit mit Einsetzen der Vernetzung gelten diese Produkte als nicht mehr verarbeitbar und die beschichteten Substrate oder auch die vernetzten Polyurethanschmelzklebstoffs müssen entsorgt werden.

Ohne eine Vernetzung ist die Temperaturbeständigkeit eines thermoaktivierbaren Polyurethanschmelzklebstoffs durch seinen Schmelzpunkt und die Viskosität des Klebstoffes in der Schmelze beschränkt. Die erreichbaren Wärmestände sind dabei, abhängig vom Molekulargewicht der Polymere, meistens nur geringfügig höher als die Schmelztemperatur des Polyurethanschmelzklebstoffs.

EP 3 763 525 A1 beschreibt eine latent reaktive / selbstvernetzende anionische aliphatische Polyurethandispersion mit Silanfunktionalisierung und einem latenten Glycidyloxi-substituiertem Alkoxysilan, welches erst während der Trocknung und Wärmeaktivierung reaktiv wird und nach der Verklebung zu einem vernetzten Polyurethan führen.

CN 106675492 beschreibt eine 1K-Zusammensetzung auf Wasserbasis, die als wesentliche Bestandteile Polyurethandispersionen, eine Ethylenvinylacetat- (oder EVA)-Dispersion und ein wasserbasiertes blockiertes Polyisocyanat-Vernetzungsmittel umfasst, welche während der Trocknung und Wärmeaktivierung reaktiv werden und nach der Verklebung zu einem vernetzten Klebstoff führen.

DE 102010013145 A1 beschreibt latent reaktive, hitzeaktivierbare, wässrige PolyurethanDispersionen und deren Verwendung zur Erzeugung von Klebeschichten, die zum einen zur Herstellung semi-struktureller, latent reaktiver, aber bereits bei Raumtemperatur leicht haftklebender Klebefolien Verwendung finden, die zum anderen aber auch nach ihrer Erwärmung und anschließenden Abkühlung noch für einen gewissen Zeitraum klebrig bleiben, bevor sie langsam aushärten.

WO 2009/062602 A1 beschreibt die Herstellung eines Identifikationsdokument aufweisend die Schichten) A), B) und C), wobei A) ein Thermoplast ist, B) eine Schicht hergestellt aus einem lagerstabilen, latent-reaktiven Klebstoff ist, und C) ein Thermoplast ist. Der latente Vernetzer reagiert erst nach der Wärmeaktivierung und Verklebung der Substrate.

DE 102019208963 A1 beschreibt ein Verfahren zum Verkleben zweier Substrate miteinander mittels einer Klebemasse, wobei die Klebmasse als Klebefolie auf einem Hilfsträger bereitgestellt und auf diesem durch Energiezufuhr aktiviert wird, so dass eine kontinuierlich ablaufende Härtungsreaktion in der Klebmasse ermöglicht wird, danach die Energiezufuhr entfernt wird, die Folie nach der Aktivierung mit der Klebseite in Kontakt mit dem ersten Substrat gebracht, der Hilfsträger von der Klebefolie getrennt und die klebrige Seite mit dem zweiten Substrat in Kontakt gebracht wird, so dass ein Klebeverbund erhalten wird, und die Klebmasse in dem Klebeverbund vollständig aushärtet.

WO2003016374A1 beschreibt wässrige Dispersionen feinteilig dispergierter oberflächendesaktivierter Feststoffisocyanate sowie Zubereitungen enthaltend diese Dispersionen und deren Verwendung zur Herstellung latent-reaktiver Schichten, Filme oder Pulver für Klebverbindungen oder Beschichtungen.

EP 1600485 B1 beschreibt wässrige Zubereitungen Isocyanat-reaktiver Polymerdispersionen mit feinteilig dispergierten oberflächendesaktivierten Oligomeren Feststoff-Isocyanaten und bestimmten Katalysatoren. Ebenfalls Gegenstand der Erfindung ist die Verwendung der Zubereitungen als latentreaktive Bindemittel, für Beschichtungen sowie für Klebstoffe in Form von Schichten, Filmen oder Pulvern sowie Substrate, die mit diesen beschichtet sind.

EP 3280775 B1 beschreibt eine Methode zum Verkleben von Substraten mit einem Klebstoff und einer reaktiven Isocyanat Komponente. Darüber hinaus bezieht sich die vorliegende Offenbarung auf ein mit diesem Verfahren erhältliches Komposit. Die Vernetzung erfolgt nach der Verklebung. Eine alternative Methode zum Erhalt von hohen Temperaturbeständigkeit von Verklebungen betrifft reaktive Polyurethan Heißklebstoffe, die über einen Überschuss von Isocyanaten nach der Verklebung erst langsam durch Reaktion mit Wasser aushärten. Nachteilig bei diesen Heißklebstoffen ist eine niedrige Anfangsfestigkeit vor Kristallisation des Schmelzklebstoffes, sowie die Notwendigkeit den Klebstoff mit Ausschluss von Feuchtigkeit zu lagern, um eine frühzeitige Vernetzung zu verhindern.

CN109777336 betrifft das technische Gebiet der Polyurethan-Dichtstoffe, insbesondere einen reaktiven Polyurethan-Schmelzklebstoff für PVC und ein Zubereitungsverfahren hierfür. Die Vernetzung erfolgt erst nach der Verklebung.

Eine weitere alternative Methode zum Erhalt von hohen Wärmeständen ist der Einsatz von blockierten Vernetzern, die bei der Wärmeaktivierung und / oder während Tempern des Klebstoffes nach der Applikation durch Abspaltung reaktive Gruppen freisetzt, die im Anschluss eine Vernetzung erzeugen.

CN112204068B beschreibt blockierte Isocyanate zum Einsatz mit Polyurethanharzen, die Eigenschaften aufweisen, die für verschiedene Anwendungen geeignet sind und beispielsweise bei Anwendungen wie Beschichtungsmaterialien und Klebstoffe eingesetzt werden, um eine verbesserte Lösungsmittelbeständigkeit, Faltfestigkeit und Schlagfestigkeit in ausgewogener Weise zu gewährleisten.

### Aufgabenstellung:

Aufgabe dieser Erfindung war es also einen Polyurethanschmelzklebstoffs bereitzustellen, der die Nachteile des beschriebenen Standes der Technik nicht aufweist.

Insbesondere war es wünschenswert, einen thermoaktivierbaren Polyurethanschmelzklebstoffs bereitzustellen, der eine erhöhte Lagerstabilität sowie eine verbesserte Temperaturbeständigkeit der Verklebung aufweist.

Die Ermittlung der Temperaturbeständigkeit eines Polyurethanschmelzklebstoffs kann nach unterschiedlichen Methoden erfolgen. Die Ergebnisse sind sowohl Methoden- als auch Substratabhängig. Um eine Vergleichbarkeit zu erhalten, wird im Folgenden eine gut nachvollziehbare rheologische Größe, der Gelpunkt des Polyurethanklebstoffes als theoretische Temperaturbeständigkeit definiert. Der Gelpunkt wird als Kreuzungspunkt des Speichermoduls G' und des Verlustmoduls G" in der Schmelze ermittelt. Dazu wird die Temperatur oberhalb des Schmelzpunktes mit 6°C / min erhöht wobei G' und G" in Scherung mit einer oszillierenden Schwingung von 1Hz und 1% Amplitude kontinuierlich in einem geeigneten Rheometer ermittelt werden. Die Temperatur, bei der Wert des Speichermoduls G' = dem Wert des Verlustmoduls G" ist wird als Geltemperatur definiert. Da diese Methode substratunabhängig ist und der Klebstoff zwischen den zwei Platten des Rheometer quasi als Klebstoffverbund vorliegt liefert sie eine gute Vergleichbarkeit für alle denkbaren Klebstoffformulierungen. Um einen guten Klebstoffverbund zu erhalten ist neben der Rheologie des Klebstoffes auch die Haftfestigkeit bei Umgebungstemperatur und bei höheren Temperaturen wichtig. Diese wird im Folgenden an weichgemachten PVC Streifen bei 23°C und bei erhöhter Temperatur (z.B. 80°C) im 180° Peeltest nach Fügung und Verpressen bei einer vorgegebenen Temperatur bewertet.

Unvernetzte Polyurethanschmelzklebstoffformulierungen weisen typischerweise einen Gelpunkt auf, der nur wenig oberhalb des Schmelzpunkts des Polyurethanschmelzklebstoffes liegt.

Daher war es wünschenswert, ein Verfahren bereitzustellen, durch das der Polyurethanschmelzklebstoff nach Aktivierung und Verpressen eine verbesserte Temperaturbeständigkeit der Klebeverbindung nach Lagern von 7 Tagen bei RT verglichen mit dem unvernetzten Polyurethanklebstoff aufweist, wobei der Gelpunkt mindestens ≥10°C, besonders bevorzugt ≥ 20°C und ganz besonders bevorzugt ≥ 30°C oberhalb des Gelpunktes des unvernetzten Polyurethanklebstoffes liegt und die Vernetzung anhand der Unlöslichkeit in einem geeigneten Lösungsmittel (z.B. N-Methyl-2-Pyrrolidon (NMP)) geprüft wird.

Die so erhaltene Verklebung sollte bevorzugt eine verbesserte Festigkeit bei ≥ 20°C oberhalb des Schmelzpunktes, bevorzugt bei ≥ 30°C und ganz besonders bevorzugt bei ≥ 40°C oberhalb des Schmelzpunktes aufweisen, als die Festigkeit bei eines vergleichbaren unvernetzten Polyurethanschmelzklebstoffs bei der entsprechenden Temperatur.

Weiter bevorzugt sollte der Polyurethanschmelzklebstoff nach Aktivierung und Verpressen eine hohe Festigkeit der Klebeverbindung nach Lagern von 7 Tagen bei Raumtemperatur von ≥ 2N/mm, bevorzugt ≥ 2,4N/mm und besonders bevorzugt von ≥ 2,8N/mm gemessen im 180° Peeltest bei 23°C von PVC (30% Weichmacher) gegen PVC (30% Weichmacher) sowie eine verbesserte Festigkeit bei 80 °C aufweisen.

Weiterhin war es wünschenswert, dass bei der Wärmeaktivierung oder Verklebung kein niedermolekulares oder flüchtiges Reaktionsprodukt mehr freigesetzt wird.

Überraschenderweise wurde gefunden, dass eine Verklebung von 2 Substraten mit einem schon vernetzten Polyurethanschmelzklebstoff bei einer Temperatur unterhalb des Gelpunktes möglich ist, wobei der erhaltene Klebstoffverbund bei Temperaturen auch oberhalb der Schmelzetemperatur eine Festigkeit aufweist, die deutlich höher ist als die durch den Schmelzpunkt gegebene Temperaturbeständigkeit des nicht vernetzten Polyurethanschmelzklebstoffs.

Daher ist ein Gegenstand der vorliegenden Erfindung ein Verfahren zur Herstellung von verklebten Verbundmaterialien mit erhöhter Temperaturbeständigkeit dadurch gekennzeichnet, dass a) ein thermoplastisches Polyurethan mit einem Schmelzpunkt Tₘ bestimmt mittels Dynamischer Differenzkalorimetrie ≥ 40°C und ≤ 150°C und einem Glasübergangspunkt T_{g} bestimmt mittels Dynamischer Differenzkalorimetrie < 0°C als Klebstoff eingesetzt wird und b) dieser Klebstoff vor der Verklebung durch eine chemische Reaktion zu einem vernetzten Polyurethanschmelzklebstoff umgesetzt wird und wobei der vernetzte Polyurethanschmelzklebstoff einen Gelpunkt ermittelt oben dargestellten Methode von höchstens 260 °C aufweist.

Das Polyurethan, das im erfindungsgemäßen Verfahren vernetzt wird, wird also nach der Vernetzung auch als vernetzter Polyurethanschmelzklebstoff bezeichnet.

Das eingesetzte thermoplastische Polyurethan weist bevorzugt einen Schmelzpunkt von ≥ 45°C und ≤ 130°C und mehr bevorzugt von ≥ 45°C und ≤ 100°C auf.

Der vernetzte Polyurethanschmelzeklebstoff weist einen Gelpunkt von ≥ 10°C, bevorzugt ≥ 20°C, besonders bevorzugt ≥ 30°C oberhalb des Gelpunktes des entsprechenden unvernetzten Polyurethanschmelzklebstoffs auf. Bevorzugt liegt der Gelpunkt im Bereich von 100°C bis 260 °C.

Das Vorliegen einer Vernetzung kann neben der Rheologie über Lösungsversuche in einem geeigneten Lösungsmittel bestätigt werden. Während die Lösungsviskosität mit zunehmendem Molekulargewicht zunimmt, sind mit Einsatz der Vernetzung die Produkte zumindest teilweise unlöslich und bilden mit dem Lösungsmittel gequollene Gele.

Bei zunehmender Vernetzung eines Polymers nimmt die Löslichkeit des Polymers in einem sonst guten Lösungsmittel ab. Vernetzte Polymere sind auch in geringen Konzentrationen in guten Lösungsmitteln nicht mehr löslich und bilden gequollene Gelkörper. Kann ein vorher gut lösliches Polymer im gleichen Lösungsmittel nach Reaktion mit einem Vernetzer nicht mehr gelöst werden, so ist das ein guter Hinweis auf das Vorliegen eines vernetzten Polymers.

Bevorzugt ist der erfindungsgemäße eingesetzte vernetzte Polyurethanschmelzklebstoff vor der Verklebung nicht mehr in NMP bei 23°C vollständig löslich.

Der erfindungsgemäß hergestellte vernetzte Polyurethanschmelzklebstoff wird bevorzugt in der Schmelze bei Temperaturen unterhalb des Gelpunktes, bevorzugt ≤ 20°C unterhalb des Gelpunktes, besonders ≤ 25°C unterhalb des Gelpunktes und ganz besonders bevorzugt ≤ 30°C und ganz besonders bevorzugt ≤ 40°C unterhalb des Gelpunktes für eine Verklebung unter Druck verarbeitet, wobei die Verarbeitungs (Aktivierungs)-Temperatur bevorzugt ≥ 10°C oberhalb des Schmelzpunkts, besonders bevorzugt ≥ 20°C oberhalb des Schmelzpunkts, und ganz besonders bevorzugt ≥ 30°C oberhalb des Schmelzpunkts liegt.

Der thermoplastische Polyurethanklebstoff wird in Form einer Dispersion, Lösung, Lösungsmitteldispersion, Schmelze, Pulver oder aus der Schmelze enthaltend mindestens eine vernetzende Komponente auf mindestens einem Substrat aufgetragen und auf diesem vor der Verklebung vernetzt.

Erfindungsgemäß kann die Verklebung mit einem vernetzten Polyurethanschmelzklebstoff mit auf verschiedene Arten ausgeführt werden, beispielweise wie folgt dargestellt.
1. Der erfindungsgemäße vernetzte Polyurethanschmelzklebstoff wird vor der Verklebung auf eine Temperatur oberhalb des Schmelzpunktes erwärmt und auf ein Substrat als Schmelze aufgetragen. Die Auftragsmenge beträgt typischerweise 10-200 g / qm Polymer. Die Verklebung mit einem zweiten Substrat erfolgt a) entweder im Anschluss an den Auftrag des vernetzten Schmelzklebstoffes mit der abgekühlten Schmelze, die eine Temperatur unterhalb des Gelpunktes aber oberhalb des Schmelzpunktes aufweist oder b) nach vollständigem Abkühlen und Reaktivierung auf eine Temperatur oberhalb des Schmelzpunktes aber unterhalb des Gelpunktes jeweils unter Druck. In einer hierbei bevorzugten Ausführungsform ist das zweite Substrat ebenfalls mit dem erfindungsgemäßen vernetzten Polyurethanschmelzklebstoffs vorbehandelt. Dann spricht man von einer zweiseitigen Verklebung oder in einer anderen bevorzugten Ausführungsform hat das zweite Substrat keine Beschichtung mit dem erfindungsgemäßen vernetzten Polyurethanschmelzklebstoffs, dann spricht man von einer ein-seitigen Verklebung. Nach Abkühlen und Kristallisation oder spätestens nach Lagerung von 7 Tagen bei 23°C und 50% Luftfeuchtigkeit erreicht der so verklebte Verbund eine Temperaturbeständigkeit nach Gelpunkt, die ≥ 10°C, bevorzugt ≥ 20°C und besonders bevorzugt ≥ 30°Ch höher ist als die Temperaturbeständigkeit des unvernetzten Polyurethanschmelzklebstoffs und / oder eine höhere Trennfestigkeit bestimmt bei bevorzugt 20°C, besonders bevorzugt 25°C und ganz besonders bevorzugt 30°C oberhalb des Schmelzpunktes des unvernetzten Polyurethanschmelzklebstoffes.
2. Der Polyurethanschmelzklebstoffs wird im unvernetzten Zustand als 2K Formulierung aus Dispersion oder Lösung oder aus der Schmelze auf mindestens ein Substrat aufgetragen, wobei die Auftragsmenge typischerweise 10-500 g / qm Polymer beträgt, wo der Polyurethanschmelzklebstoffs nach Trocknung unter Vernetzung reagiert, bis mindestens 70% der reaktiven Gruppen des eingesetzten Vernetzers abreagiert sind (bestimmt durch FTIR-/ATR (Fuoriertransformation Infrarot Abgeschwächte Totalreflexion) Messung), bevor der dann vernetzte Polyurethanschmelzklebstoff durch eine erneute Wärmeaktivierung auf eine Temperatur oberhalb des Schmelzpunkts, aber unterhalb des Gelpunktes erwärmt wird und eine Verklebung unter Druck erfolgt. Wie in 1. Beschrieben kann die Verklebung sowohl einseitig wie auch zweiseitig ausgeführt werden. Nach Abkühlen und Kristallisation oder spätestens nach Lagerung von 7 Tagen bei 23°C und 50% Luftfeuchtigkeit erreicht der so verklebte Verbund eine Temperaturbeständigkeit nach Gelpunkt, die ≥ 10°C, bevorzugt ≥ 20°C und besonders bevorzugt ≥ 30°C höher ist als die Temperaturbeständigkeit des unvernetzten Schmelzklebstoffes und / oder eine höhere Trennfestigkeit bestimmt bei bevorzugt 20°C, besonders bevorzugt 25°C und ganz besonders bevorzugt 30°C oberhalb des Schmelzpunktes des unvernetzten Polyurethanschmelzklebstoffes. Die höhere Temperaturbeständigkeit nach Gelpunkt kann durch vergleichende Versuche mit den entsprechenden unvernetzten Polyurethanschmelzklebstoffen nachgewiesen werden.
3. Der Polyurethanschmelzklebstoffs wird im unvernetzten Zustand als 2K Formulierung aus Dispersion oder Lösung oder Schmelze auf ein Substrat aufgetragen, wobei die Auftragsmenge typischerweise 10-500 g / qm Polymer beträgt, wo der Polyurethanschmelzklebstoff trocknet und / oder abkühlt und vernetzt bevor er mit einer zweiten Polymerschmelze eines anderen Thermoplasten als zweites Substrat in Kontakt gebracht wird. Nach Abkühlen und Kristallisation oder spätestens nach Lagerung von 7 Tagen bei 23°C und 50% Luftfeuchtigkeit erreicht der so verklebte Verbund eine Temperaturbeständigkeit nach Gelpunkt, die ≥ 10°C, bevorzugt ≥ 20°C und besonders bevorzugt ≥ 30°C höher ist als die Temperaturbeständigkeit des unvernetzten Schmelzklebstoffes und / oder eine höhere Trennfestigkeit bestimmt bei bevorzugt 20°C, besonders bevorzugt 25°C und ganz besonders bevorzugt 30°C oberhalb des Tg bzw. wenn vorhanden Schmelzpunktes des unvernetzten Polyurethanschmelzklebstoffes.
Die zweite Polymerschmelze ist dabei ausgewählt aus der Gruppe der thermoplastischen Polyester, Polyacrylate, Polyurethane, Polyamide, Polyetheramide, Polyketone oder Abmischungen und Co-Polymeren der genannten.

Es ist weiterhin möglich, dass zumindest eines der zu verklebenden Substrate mit einem vernetzten Polyurethanschmelzklebstoff wie oben beschrieben hergestellt vorbeschichtet ist.

Die Vorbeschichtung des mindestens einen Substrates kann mit einem thermoplastischen Polyurethanschmelzklebstoff erfolgen, der entweder auf dem Substrat vernetzt wurde oder vor der Beschichtung schon vernetzt war. Die Vorbeschichtung auf dem mindestens einen Substrat kann einen Trocknungs- und / oder Temperier-Schritt beinhalten, bei der das thermoplastische Polyurethan vernetzt und die Vernetzer Komponente zu ≥ 70% abreagiert.

Durch die Vernetzung wird erfindungsgemäß der Lage des Schmelzpunktes des Polyurethanschmelzklebstoffs, typischerweise nur geringfügig beeinflusst. Bevorzugt verändert sich der Schmelzpunkt des vernetzen Polyurethanschmelzklebstoffs um weniger als ± 20°C bevorzugt um weniger als ± 10°C gegenüber dem unvernetzten Polyurethanschmelzklebstoff.

Bevorzugt weist der vernetzte thermoplastische Polyurethanschmelzklebstoff einen Gewichtsprozentanteil an Polyurethangruppen -O-C(O)-NH- von ≥ 1 Gew.% und ≤ 10 Gew.% auf.

Die erfindungsgemäß eingesetzten Polyurethane sind Reaktionsprodukte aus Isocyanaten und Polyolen sowie gegebenenfalls weiteren Komponenten, die zur Kettenverlängerung, Terminierung oder Hydrophilierung dienen.

Zur Herstellung des Polyurethans geeignete Isocyanate sind aromatische, araliphatische, aliphatische oder cycloaliphatische Isocyanate. Es können auch Mischungen solcher Isocyanate eingesetzt werden.

Bevorzugt handelt es sich bei den Isocyanaten um Isocyanate mit mindestens zwei Isocyanatgruppen pro Molekül, welche im Folgenden als Polyisocyanate bezeichnet werden.

Beispiele geeigneter Polyisocyanate sind Butylendiisocyanat (BDI), Pentylendiisocyanat (PDI), Hexamethylendiisocyanat (HDI), Isophorondiisocyanat (IPDI), 1,3-Bis(isocyanatomethyl)benzol (1,3-Xylylendiisocyanat, XDI), 1,4-Bis(isocyanatomethyl)benzol (1,4-Xylylendiisocyanat, XDI), 1,3-Bis(1-isocyanato-1-methyl-ethyl)benzol (TMXDI), 1,4-Bis(1-isocyanato-1-methyl-ethyl)benzol (TMXDI), 2,2,4 und/oder 2,4,4-Trimethylhexamethylendiisocyanat, die isomeren Bis(4,4'-isocyanatocyclohexyl)methane oder deren Mischungen beliebigen Isomerengehalts, Isocyanatomethyl-1,8-octandiisocyanat (TIN), 1,4-Cyclohexylendiisocyanat, 1,4-Phenylendiisocyanat, 2,4- und/oder 2,6-Toluylendiisocyanat, 1,5-Naphthylendiisocyanat, 2,4'- oder 4,4'-Diphenylmethandiisocyanat, Triphenylmethan-4,4',4"-triisocyanat oder deren Derivate mit Urethan-, Isocyanurat-, Allophanat-, Biuret-, Uretdion-, Iminooxadiazindionstruktur und Mischungen derselben, wie sie beispielsweise in J. Prakt. Chem. 336 (1994) S. 185-200 beschrieben sind.. Bevorzugt handelt es sich um Polyisocyanate oder Polyisocyanatgemische der genannten Art mit ausschließlich aliphatisch und/oder cycloaliphatisch gebundenen Isocyanatgruppen.

Besonders bevorzugte Isocyanate sind Polyisocyanate beziehungsweise Polyisocyanatgemische auf Basis von PDI, HDI, IPDI und/oder 4,4'-Diisocyanatodicyclohexylmethan, ganz besonders bevorzugt auf Basis von HDI und IPDI. Insbesondere vorteilhaft handelt es sich bei dem Isocyanat um ein Gemisch aus HDI und IPDI.

Geeignete polymere Polyole verfügen über eine OH-Funktionalität von ≥ 1,5 bis ≤ 4, wie zum Beispiel Polyacrylate, Polyester, Polylactone, Polyether, Polycarbonate, Polyestercarbonate, Polyacetale, Polyolefine und Polysiloxane. Bevorzugt sind Polyole in einem zahlenmittleren Molgewicht von ≥ 400 g/mol bis ≤ 2500 g/mol und einer OH-Funktionalität von ≥ 1,9 bis ≤ 3. Besonders bevorzugte polymere Polyole (A2) sind Polyester, Polycarbonat- und/oder Polyether-, ganz besonders bevorzugt Polyesterpolyole.

Das zahlenmittlere Molekulargewicht wird im Rahmen dieser Anmeldung stets bestimmt durch Gelpermeationschromatographie (GPC) in Tetrahydrofuran (THF) bei 23°C. Es wird dabei vorgegangen nach DIN 55672-1: "Gelpermeationschromatographie, Teil 1 - Tetrahydrofuran als Elutionsmittel" (SECurity GPC-System von PSS Polymer Service, Flussrate 1,0 ml/min; Säulen: 2×PSS SDV linear M, 8×300 mm, 5 µm; RID-Detektor). Dabei werden Polystyrolproben bekannter Molmasse zur Kalibrierung verwendet. Die Berechnung des zahlenmittleren Molekulargewichts erfolgt softwaregestützt. Basislinienpunkte und Auswertegrenzen werden entsprechend der DIN 55672 Teil 1 festgelegt.

Die in Frage kommenden Hydroxylgruppen aufweisenden Polycarbonate sind durch Reaktion von Kohlensäurederivaten, zum Beispiel Diphenylcarbonat, Dimethylcarbonat oder Phosgen mit Diolen erhältlich. Als derartige Diole kommen zum Beispiel Ethylenglykol, 1,2- und 1,3-Propandiol, 1,3- und 1,4-Butandiol, 1,6-Hexandiol, 1,8-Octandiol, Neopentylglykol, 1,4-Bishydroxymethylcyclohexan, 2-Methyl-1,3-propandiol, 2,2,4-Trimethylpentandiol-1,3, Dipropylenglykol, Polypropylenglykole, Dibutylenglykol, Polybutylenglykole, Bisphenol A, Tetrabrombisphenol A aber auch Lacton-modifizierte Diole in Frage. Bevorzugt enthält die Diolkomponente ≥ 40 Gewichts-% bis ≤ 100 Gewichts-% Hexandiol, bevorzugt 1,6-Hexandiol und/oder Hexandiol-Derivate, bevorzugt solche, die neben endständigen OH-Gruppen Ether- oder Estergruppen aufweisen, zum Beispiel Produkte, die durch Umsetzung von 1 Mol Hexandiol mit mindestens 1 Mol, bevorzugt 1 bis 2 Mol Caprolacton gemäß DE-A 1 770 245 oder durch Veretherung von Hexandiol mit sich selbst zum Di- oder Trihexylenglykol erhalten wurden. Die Herstellung solcher Derivate ist zum Beispiel aus DE-A 1 570 540 bekannt. Auch die in DE-A 3 717 060 beschriebenen Polyether-Polycarbonatdiole können eingesetzt werden.

Die Hydroxylpolycarbonate sollten bevorzugt linear sein. Sie können jedoch gegebenenfalls durch den Einbau polyfunktioneller Komponenten, insbesondere niedermolekularer Polyole, leicht verzweigt werden. Hierzu eignen sich beispielsweise Glycerin, Trimethylolpropan, Hexantiol-1,2,6, Butantriol-1,2,4, Trimethylolpropan, Pentaerythrit, Chinit, Mannit, und Sorbit, Methylglykosid, 1,3,4,6-Dianhydrohexite.

Als Polyetherpolyole geeignet sind die in der Polyurethanchemie an sich bekannten Polytetramethylenglykolpolyether, die zum Beispiel über Polymerisation von Tetrahydrofuran durch kationische Ringöffnung hergestellt werden können. Ebenfalls besonders geeignet sind Polyether auf Polyethylenoxid Basis.

Darüber hinaus geeignete Polyetherpolyole sind die unter Verwendung von Startermolekülen hergestellten Polyadditionsprodukte des Ethylenoxids, Propylenoxids, Butylenoxids, Styroloxids oder Epichlorhydrins, sowie deren Misch- und Pfropfpolyadditionsprodukte sowie die durch Kondensation von mehrwertigen Alkoholen oder deren Mischungen und die durch Alkoxylierung von Wasser, mehrwertigen Alkoholen, Aminen oder Aminoalkoholen gewonnenen Polyether eingesetzt. Bevorzugt sind Homo- und/oder Mischpolyadditionsverbindungen von Ethylenoxid und/oder Propylenoxid.

Der Anteil an Ethylenoxid in den Homo- und/oder Mischpolyadditionsverbindungen von Ethylenoxid und/oder Propylenoxid beträgt 0 bis 100 Gew.-%, bevorzugt 0 bis 30 Gew.-%, besonders bevorzugt 0 bis 10 Gew.-%.

Polyesterpolyole sind beispielsweise die an sich bekannten Polykondensate aus Di- sowie gegebenenfalls Tri-, und Tetraolen und Di- sowie gegebenenfalls Tri- und Tetracarbonsäuren oder Hydroxycarbonsäuren oder Lactonen. Anstelle der freien Polycarbonsäuren können auch die entsprechenden Polycarbonsäureanhydride oder entsprechende Polycarbon-säureester von niederen Alkoholen zur Herstellung der Polyester verwendet werden.

Beispiele hierfür geeigneter Diole sind Ethylenglykol, Butylenglykol, Diethylenglykol, Triethylenglykol, Polyalkylenglykole wie Polyethylenglykol, weiterhin 1,2-Propandiol, 1,3-Propandiol, Butandiol(1,3), Butandiol(1,4), Hexandiol(1,6) und Isomere, Neopentylglykol oder Hydroxypivalinsäureneopentylglykolester. Daneben können auch Polyole wie Trimethylolpropan, Glycerin, Erythrit, Pentaerythrit, Trimethylolbenzol oder Trishydroxy-ethylisocyanurat eingesetzt werden.

Als Dicarbonsäuren können Phthalsäure, Isophthalsäure, Terephthalsäure, Tetrahydrophthalsäure, Hexahydrophthalsäure, Cyclohexandicarbonsäure, Adipinsäure, Bernsteinsäure, Azelainsäure, Sebacinsäure, Glutarsäure, Tetrachlorphthalsäure, Maleinsäure, Fumarsäure, Itaconsäure, Malonsäure, Korksäure, 2 Methylbernsteinsäure, 3,3-Diethylglutarsäure und/oder 2,2-Dimethylbernsteinsäure eingesetzt werden. Als Säurequelle können auch die entsprechenden Anhydride verwendet werden.

Sofern die mittlere Funktionalität des zu veresternden Polyols größer als 2 ist, können zusätzlich auch Monocarbonsäuren, wie Benzoesäure und Hexancarbonsäure mit verwendet werden.

Hydroxycarbonsäuren, die als Reaktionsteilnehmer bei der Herstellung eines Polyesterpolyols mit endständigen Hydroxylgruppen mitverwendet werden können, sind beispielsweise Hydroxycapronsäure, Hydroxybuttersäure, Hydroxydecansäure, Hydroxystearinsäure und dergleichen. Geeignete Lactone sind Caprolacton, Butyrolacton und Homologe. Bevorzugt ist Caprolacton.

Bevorzugt sind Polyesterpolyole basierend auf Adipinsäure und 1,4-Butandiol und/oder 1,6-Hexandiol.

Zur Kettenverlängerung und/oder Terminierung des Polyurethan-Prepolymers geeignet sind beispielswese monofunktionelle Alkohole und Monoamine. Bevorzugte Monoalkohole sind aliphatische Monoalkohole mit 1 bis 18 C-Atomen, wie zum Beispiel Ethanol, n-Butanol, Ethylenglykol-monobutylether, 2-Ethylhexanol, 1-Octanol, 1-Dodecanol oder 1-Hexadecanol. Bevorzugte Monoamine sind aliphatische Monoamine, wie zum Beispiel Diethylamin, Dibutylamin, Ethanolamin, N-Methylethanolamin oder N,N-Diethanolamin und Amine der Jeffamin^{®} M-Reihe (Huntsman Corp. Europe, Belgien) oder aminofunktionelle Polyethylenoxide und Polypropylenoxide.

Ebenfalls als Komponente zur Kettenverlängerung und/oder Terminierung geeignet sind Polyole, Aminopolyole oder Polyamine mit einem Molgewicht unter 400 g/mol, die in der entsprechenden Literatur in großer Zahl beschrieben sind.

Bevorzugte Komponenten sind beispielsweise:
a) Alkandiole beziehungsweise -triole, wie Ethandiol, 1,2- und 1,3-Propandiol, 1,4- und 2,3-Butandiol, 1,5-Pentandiol, 1,3-Dimethylpropandiol, 1,6-Hexandiol, Neopentylglykol, 1,4-Cyclohexandimethanol, 2-Methyl-1,3-propandiol, 2-Ethyl-2-butylpropandiol, Trimethylpentandiol, stellungsisomere Diethyloctandiole, 1,2- und 1,4-Cyclohexandiol, hydriertes Bisphenol A [2,2-Bis(4-hydroxycyclohexyl)-propan], 2,2-Dimethyl-3-hydroxypropionsäure-(2,2-dimethyl-3-hydroxypropylester), Trimethylolethan, Trimethylolpropan oder Glycerin,
b) Etherdiole, wie Diethylendiglykol, Triethylenglykol, Tetraethylenglykol, Dipropylenglykol, Tripropylenglykol, 1,3-Butylenglykol oder Hydrochinondihydroxyethylether,
c) Esterdiole der allgemeinen Formeln (I) und (II),

   HO-(CH₂)ₓ-CO-O-(CH₂)y-OH (I)

   HO-(CH₂)ₓ-O-CO-R-CO-O(CH₂)ₓ OH (II)
in welchen
R ein Alkylen- oder Arylenrest mit 1 bis 10 C-Atomen, bevorzugt 2 bis 6 C-Atomen,
x 2 bis 6 und
y 3 bis 5 ist,
wie zum Beispiel δ-Hydroxybutyl-ε-hydroxy-capronsäureester, ω-Hydroxyhexyl-γ-hydroxybuttersäureester, Adipinsäure-(β-hydroxyethyl)ester und Terephthalsäurebis((3-hydroxyethyl)ester und
d) Di- und Polyamine wie zum Beispiel 1,2-Diaminoethan, 1,3 Diaminopropan, 1,6-Diaminohexan, 1,3- und 1,4-Phenylendiamin, 4,4'-Diphenylmethandiamin, Isophorondiamin, Isomerengemisch von 2,2,4- und 2,4,4-Trimethylhexa-methylendiamin, 2-Methyl-pentamethylendiamin, Diethylentriamin, 1,3- und 1,4-Xylylendiamin, α,α,α,α'-Tetramethyl-1,3- und -1,4-xylylendiamin, 4,4-Diaminodicyclohexylmethan, aminofunktionelle Polyethylenoxide oder Polypropylenoxide, die unter dem Namen Jeffamin , D-Reihe (Fa. Huntsman Corp. Europe, Belgien) erhältlich sind, Diethylentriamin und Triethylentetramin. Als Diamine im Sinne der Erfindung sind auch Hydrazin, Hydrazinhydrat und substituierte Hydrazine geeignet, wie zum Beispiel N-Methylhydrazin, N,N'-Dimethylhydrazin und deren Homologe sowie Säuredihydrazide, Adipinsäure, β-Methyladipinsäure, Sebacinsäure, Hydracrylsäure und Terephthalsäure, Semicarbazido-alkylenhydrazide, wie zum Beispiel β-Semicarbazidopropionsäurchydrazid (zum Beispiel beschrieben in DE-A 1 770 591), Semicarbazidoalkylen-carbazinester, wie zum Beispiel 2-Semicarbazidoethylcarbazinester (zum Beispiel beschrieben in DE-A 1 918 504) oder auch Aminosemicarbazid-Verbindungen, wie zum Beispiel β-Aminoethylsemicarbazido-carbonat (zum Beispiel beschrieben in DE-A 1 902 931).

Zur Hydrophilierung geeignete Komponenten können ionische Gruppen enthalten oder nichtionisch hydrophilierend wirkende Verbindungen sein.

Die ionischen Gruppen können entweder kationischer oder anionischer Natur sein. Kationisch, anionisch dispergierend wirkende Verbindungen sind solche, die beispielsweise Sulfonium-, Ammonium-, Phosphonium-, Carboxylat-, Sulfonat-, Phosphonat-Gruppen oder die Gruppen, die durch Salzbildung in die vorgenannten Gruppen überführt werden können (potentiell ionische Gruppen)

Geeignete ionische oder potentiell ionische Verbindungen sind zum Beispiel Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, 1,2- oder 1,3-Propylendiamin-β-ethylsulfonsäure, Ethylendiamin-propyl- oder -butylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-dio 1-1,4, Polyethersulfonat, das propoxylierte Addukt aus 2-Butendiol und NaHSO3, zum Beispiel beschrieben in DE-A 2 446 440 (Seite 5-9, Formel I-III) sowie in kationische Gruppen überführbare Bausteine wie N-Methyl-diethanolamin als hydrophile Aufbaukomponenten. Bevorzugte ionische oder potentielle ionische Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure. Ganz besonders bevorzugt sind die Natriumsalze von N-(2-Aminoethyl)-β-alanin und 2-(2-Amino-ethylamino-)-ethansulfonsäure. Ebenfalls ganz besonders bevorzugt ist Dimethylpropionsäure. In einer vorteilhaften Ausführungsform werden sowohl Natriumsalze von N-(2-Aminoethyl)-β-alanin oder 2-(2-Amino-ethylamino-) - ethansulfonsäure, als auch Dimethylpropionsäure eingesetzt.

Geeignete nichtionisch hydrophilierend wirkende Verbindungen sind zum Beispiel Polyoxyalkylenether, die mindestens eine Hydroxy- oder Aminogruppe enthalten. Diese Polyether enthalten einen Anteil von 30 Gewichts-% bis 100 Gewichts-% an Bausteinen, die vom Ethylenoxid abgeleitet sind. In Frage kommen linear aufgebaute Polyether einer Funktionalität zwischen 1 und 3, aber auch Verbindungen der allgemeinen Formel (III), 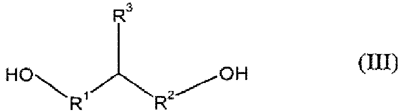 in welcher
R¹ und R² unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und R³ für einen alkoxyterminierten Polyethylenoxidrest steht.

Nichtionisch hydrophilierend wirkende Verbindungen sind beispielsweise auch einwertige, im statistischen Mittel ≥ 5 bis ≤ 70, bevorzugt ≥ 7 bis ≤ 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (zum Beispiel in Ullmanns Encyclopädie der technischen Chemie, 4. Auflage, Band 19, Verlag Chemie, Weinheim S. 31-38).

Zur Herstellung des Polyurethans können sämtliche, aus dem Stand der Technik bekannte Verfahren wie Emulgator-Scherkraft-, Aceton-, Präpolymer-Misch-, Schmelz-Emulgier-, Ketimin- und Feststoff-Spontan-Dispergier-Verfahren oder Abkömmlinge davon verwendet werden. Eine Zusammenfassung dieser Methoden findet sich in Methoden der organischen Chemie (Houben-Weyl, Erweiterungs- und Folgebände zur 4. Auflage, Band E20, H. Bartl und J. Falbe, Stuttgart, New York, Thieme 1987, S. 1671-1682). Bevorzugt ist das Schmelz-Emulgier-, Präpolymer-Misch- und das Aceton-Verfahren. Besonders bevorzugt ist das Aceton-Verfahren.

Die Polyurethane werden im erfindungsgemäßen Verfahren vor der Verklebung vernetzt.

Als geeignet Vernetzer (Vernetzermoleküle) sind zum Beispiel gebräuchliche aliphatische oder aromatische Polyisocyanate, Polyepoxide, Polyanhydride, Polyuretdione, Polycarbodiimide, Polysilane, Polyazziridine, Polyamine etc. zu nennen sowie strahlungsaktivierbare doppelbindungshaltige Vernetzer Formulierungen oder Vernetzer, die über oxidative Alterung aktiviert werden. Die Vernetzer werden typischerweise in Mengen von 0,1% bis 10% bezogen auf den Polymergehalt der Formulierung eingesetzt.

Bevorzugt werden als Vernetzer aliphatische oder aliphatische Polyisocyanate eingesetzt.

Grundvoraussetzung für eine Vernetzung des Polyurethanklebstoffes ist dabei in jedem Fall die Anwesenheit von gegenüber den Vernetzermolekülen aktiven Zentren, die mit diesen unter chemischer Vernetzung reagieren können. Je nach Vernetzermolekül können die vernetzungsaktiven Zentren dabei unterschiedliche Form haben wie zum Beispiel, primäre und sekundäre Alkohole, primäre und sekundäre Amine, Urethangruppen, Ureagruppen, Säuregruppen, Epoxidgruppen, Estergruppen, Carbonatgruppen, ungesättigte C=C Doppelbindungen, Silangruppen und andere. Bevorzugt enthalten die erfindungsgemäß vernetzten Polyurethanschmelzklebstoffe folgende Bestandteile (wobei die Prozentangaben, wenn nicht anders definiert, als Gewichtsanteile zu verstehen sind):
a) Zu 30%-99,5 Gew.% Polyurethane mit einem Urethangruppengehalt (NCOOC) ≥0,5 Gew. % und ≤10% ., Gew einem Ureagehalt (NCON) von 0- 5 Gew. %, einem Estergruppengehalt (COOC) von 1-30 Gew. % und einen Isocyanuratgruppengehalt (NCO)s von 0-5 Gew. % und einen Si Gehalt von 0-3 Gew. %.
b) Zu 0-50 Gew. % polymere organische nicht-Polyurethanverbindungen mit einem Tg zwischen -70°C und 100°C und bevorzugt mit einem Schmelzpunkt zwischen 30°C und 150°C.
c) Zu 0-30 Gew. % Weichmacher mit einem Tg ≤ 10°C und einem Molekulargewicht Mn nach GPC ≤ 20000 g/mol gegen Polystyrol Standards in THF gemessen.
d) Zu 0,1-5 Gew. % Wasser
e) Zu 0-40 Gew. % anorganische Füllstoffe und / oder Pigmente
f) Zu 0-10 Gew. % organische und / oder anorganische Verdicker
g) Zu 0-5 Gew. % flüchtige organische Verbindungen mit einem Siedepunkt ≤ 250°C

Erfindungsgemäß vernetzte Polyurethanschmelzklebstoffe haben einen Gelpunkt, der nach Messung in der Schmelze ≥ 10°C bevorzugt ≥ 20°C besonders bevorzugt ≥ 30°C oberhalb des Gelpunktes des entsprechenden unvernetzten Polyurethanschmelzklebstoffs aber ≤ 260°C beträgt, und bevorzugt ≥ 20°C mehr bevorzugt ≥ 30°C und noch mehr bevorzugt ≥ 40°C oberhalb des Schmelzpunktes liegt.

Bevorzugt weisen die erfindungsgemäß vernetzten Polyurethanschmelzklebstoffe bei einer Temperatur von 100°C, oder bei einer Temperatur von 50° oberhalb des Schmelzpunktes bei einer oszillierenden Messung in Scherung bei 1Hz und 1% Amplitude einen G' von ≥ 20 kPa, bevorzugt ≥ 50 kPa mehr bevorzugt ≥ 100 kPa und am meisten bevorzugt ≥ 150 kPa auf.

Bevorzugt werden die vernetzten Polyurethanschmelzklebstoffe erhalten durch Umsetzung unvernetzter Polyurethanschmelzklebstoffe mit einen G' bei einer oszillierenden Messung in Scherung bei 1Hz und 1% Amplitude in der Schmelze bei einer Temperatur von 100°C oder bei einer Temperatur von 50° oberhalb des Schmelzpunktes von ≤ 500 kPa bevorzugt ≤ 200 kPa mehr bevorzugt ≤ 150 kPa und am meisten bevorzugt ≤ 120 kPa und weiter bevorzugt größer ≥ 1kPa eingesetzt, um eine Verarbeitbarkeit in der Schmelze zu gewährleisten.

Bevorzugt enthalten die nicht vernetzten Polyurethane Isocyanat-reaktive Gruppen. Bevorzugt findet die Vernetzung mittels Reaktion von freien Isocyanaten als Vernetzer mit Isocyanat-reaktiven Gruppen statt. Bevorzugte Isocyanat-reaktive Gruppen sind Hydroxide, Carboxylate, Epoxyde, Ureagruppen, Urethangruppen, Amine, Thiole, Uretdione und andere dem Fachmann bekannte Isocyanat-reaktive Gruppen.

Bevorzugt enthalten die Vernetzer mindestens zwei freie oder reversibel blockierte Isocyanate oder Derivate der Isocyanate, die mit zumindest einer Isocyanat-reaktiven Gruppe unter Ausbildung einer Vernetzung reagieren können. Beispielhaft sind aliphatische und aromatische di- und Polyisocyanate oder Isocyanatprepolymere von Ethern- oder Esterpolyolen oder Polyaminen sowie Verbindungen enthaltend Uretdiongruppen und / oder Carbodiimidgruppen. Bevorzugt sind die vernetzenden Isocyanate aliphatisch und Derivate von Hexamethylenediisocyanat, Pentamethylendiisocyant, Isophorondiisocyanat, hydriertem H12MDI oder anderen gebräuchlichen aliphatischen Diisocyanaten.

In einer weiteren bevorzugten Ausführungsform haben die unvernetzten Polyurethane eine mittlere Funktionalität an Isocyanat-reaktiven Gruppen von ≥ 1,5 besonders bevorzugt ≥ 2 und ganz besonders bevorzugt ≥ 3 und die Vemetzermoleküle eine mittlere vernetzungsaktive Funktionalität ≥ 1,5 bevorzugt ≥ 2 und ganz besonders bevorzugt ≥ 2,5.

Weiter bevorzugt beträgt die mittlere Funktionalität der Isocyanat-reaktiven Gruppen ≥ 2 und die mittlere vernetzungsaktive Funktionalität der Vemetzermoleküle > 2. Weiter bevorzugt beträgt die mittlere Funktionalität der Isocyanat-reaktiven Gruppen ≤ 5 und die mittlere vernetzungsaktive Funktionalität der Vemetzermoleküle ≤ 5.

In einer weiteren bevorzugten Ausführungsform haben die unvernetzten Polyurethane ein Molekulargewichtsmittel nach GPC gemessen gegen Polystyrol Standards in THF von ≥ 20.000 Mw, bevorzugt ≥ 25.000 Mw und ganz besonders bevorzugt ≥ 30.000 Mw und ≤ 200000 Mw und mehr bevorzugt ≤ 150000 Mw, jeweils in g/mol.

In einer weiteren bevorzugten Ausführungsform werden die Polyurethanschmelzklebstoffe radikalisch vernetzt über eingebaute freie Doppelbindungen und radikalspendende Starter wie organische und anorganische Peroxide, Azo-Verbindungen, Photoinitiatoren und / oder Anhydride, und / oder Diamine, und / oder Polyamine.

Erfindungsgemäß können verschiedene Vernetzungsreaktionen kombiniert werden, um die erfindungsgemäß vernetzten Polyurethanschmelzklebstoffen zu erhalten.

Eine Zufügung von Vemetzer-Chemie, die nicht direkt mit dem Polyurethan, sondern hauptsächlich mit sich selbst unter Ausbildung eines sekundären Netzwerkes abreagiert, ist dabei nicht ausgeschlossen. Erfindungsgemäß relevant ist dabei aber nur eine Vernetzung, die zu einer Erhöhung der Temperatur des Gelpunktes des Polyurethanschmelzklebstoffes beiträgt wobei der Gelpunkt ≤ 260°C betragen sollte, um ein Fügen mit ausreichender Endfestigkeit bei erhöhter Temperatur noch zu ermöglichen. Die Endfestigkeit bei erhöhter Temperatur sollte dabei spürbar höher sein als die Endfestigkeit des Polyurethanschmelzklebstoffes ohne Vernetzung.

In einer weiteren bevorzugten Ausführungsform wird die Vernetzung des Polyurethanschmelzklebstoffs bei Wärmeeinwirkung in der Schmelze durchgeführt, wobei der Klebeprozess erst nach weitgehender Abreaktion der Vernetzer-Moleküle erfolgt.

In einer weiteren bevorzugten Ausführungsform werden vernetzte Polyurethanschmelzklebstoffe durch Erhitzen oberhalb ihres Gelpunktes in der Schmelze auf ein mindestens erstes Substrat aufgetragen.

In einer weiteren bevorzugten Ausführungsform werden vernetzte Polyurethane in Folienform auf eine Temperatur oberhalb des Schmelzpunktes aber unterhalb des Gelpunktes aktiviert (d.h. erhitzt) und mit mindestens einem gewünschten Substrat verpresst. Erfindungsgemäß haben die vernetzungsreaktiven Gruppen der Vernetzer vor Einsatz der vernetzten Polyurethanschmelzklebstoffe zur Verbindung von 2 Substraten nach Temperaturaktivierung auf eine Temperatur oberhalb des Schmelzpunktes und Verpressen unter Druck zu mindestens ≥ 70%, bevorzugt ≥ 75% und besonders bevorzugt ≥ 80% abreagiert.

Die Reaktion der Vemetzermoleküle und die Restkonzentration reaktiver Gruppen der Vemetzermoleküle zum Beispiel Isocyanate kann dabei bevorzugt über FTIR-/ATR Analyse vergleichend über die Signalfläche ermittelt. Dabei wird angenommen, dass die Fläche unter dem Signal der jeweiligen vernetzungsaktiven Komponenten linear mit der Konzentration der reaktiven Gruppe korreliert.

In einer weiteren bevorzugten Ausführungsform wird die Vernetzung nach Auftragung eines Zweikomponentenschmelzklebstoffs aus Lösung oder Dispersion oder Schmelze auf mindestens einem oder beiden Klebstoffsubstraten nach Trocknung auf dem Substrat durchgeführt, wobei die Fügung erst nach weitgehender Abreaktion der Vernetzer-Moleküle erfolgt.

Bevorzugt werden die mit dem erfindungsgemäßen vernetzten Polyurethanschmelzklebstoffen hergestellten Verbundmaterialen mittel Druck und Wärme gefügt. Ein solches Verbundmaterial ist ein weiterer Gegenstand der vorliegenden Erfindung.

Der bevorzugte Fügedruck beträgt dabei ≥ 0,5 bar, bevorzugt ≥1 bar, besonders bevorzugt ≥ 2 bar und ganz besonders bevorzugt ≥ 4 bar, die bevorzugte Aktivierungstemperatur des vernetzten Polyurethanschmelzklebstoffs liegt dabei mindestens 5°C bevorzugt mindestes 10°C und besonders bevorzugt mindestens 20°C oberhalb der Schmelzetemperatur des Polyurethans.

### Beispiele

### Einsatzstoffe:

Polyurethandispersion Dispercoll^{®} U56: Anionische, hochmolekulare Polyurethan-Dispersion (wässrig) zur Herstellung von Klebstoffen mit einem Schmelzpunkt von ca. 48°C und einem Tg von ca. -58°C nach DSC. mit 20K/min. Geeignet für Anwendungen auf temperaturempfindlichen Substraten. Bezogen von Covestro Deutschland AG. Aus der Rezeptur kalkulierter Urethangehalt: ca. 5 Gew.% bezogen auf den Polymergehalt unter der Annahme, dass jede eingesetzte Isocyanatgruppe durch Kettenverlängerung in eine Urethangruppe überführt wird. Diese Annahme. gilt auch für die weiter unten genannten Polyurethanpolymere

Polyurethandispersion Dispercoll^{®} U54: Anionische, hochmolekulare Polyurethan-Dispersion (wässrig) zur Herstellung von Klebstoffen mit einem Schmelzpunkt von ca. 48°C und einem Tg von ca. -58°C nach DSC mit 20K/min. Besonders geeignet für Anwendungen auf weichmacherhaltigem PVC. Bezogen von Covestro Deutschland AG. Aus der Rezeptur kalkulierter Urethangehalt: ca. 5 Gew.% bezogen auf den Polymergehalt.

Dispercoll^{®} U58: Anionische, hochmolekulare Polyurethan-Dispersion (wässrig) zur Herstellung von Klebstoffen mit einem Schmelzpunkt von ca. 48°C und einem Tg von ca -58°C nach DSC mit 20K/min. Besonders geeignet für Anwendungen auf weichmacherhaltigem PVC. Bezogen von Covestro Deutschland AG. Aus der Rezeptur kalkulierter Urethangehalt: ca. 5 Gew.% bezogen auf den Polymergehalt.

Dispercoll^{®} U XP 2643: Anionische hochmolekulare amorphe Polyurethan-Dispersion mit einem Tg von ca. -56°C nach DSC mit 20K/min. Es ist ein Rohstoff für die Formulierung von Klebstoffen. Aufgrund der charakteristischen Polymereigenschaften eignet sich Dispercoll^{®} U XP 2643 für Verklebungen bei Raumtemperatur und Anwendungen bei niedrigen Wärmeaktivierungstemperaturen. Bezogen von Covestro Deutschland AG. Aus der Rezeptur kalkulierter Urethangehalt: ca. 5 Gew.% bezogen auf den Polymergehalt.

Dispercoll^{®} U XP 2824: Hochmolekulare anionische Polyurethan-Dispersion (wässrig) mit einem Schmelzpunkt von ca. 48°C und einem Tg von ca -58°C nach DSC mit 20K/min. Es ist ein Rohstoff für die Formulierung von Klebstoffen. Dispercoll^{®} U XP 2824 enthält Carboxylgruppen in der Polymerkette, die mit dem Polycarbodiimid aus Desmodur^{®} 2802 vernetzt werden können, um hochwertige Klebverbindungen zu erzeugen. Bezogen von Covestro Deutschland AG. Aus der Rezeptur kalkulierter Urethangehalt: ca. 5 Gew.% bezogen auf den Polymergehalt.

Desmomelt^{®} U 410: Aliphatischer hochmolekularer Polyester-Polyurethan-Kleberohstoff mit einem Schmelzpunkt von ca. 48°C und einem Tg von ca -58°C nach DSC mit 20K/min. Desmomelt^{®} U 410 ist ein fester Rohstoff zur Formulierung vergilbungsfreier, thermisch aktivierbarer Klebstoffe. Desmomelt^{®} U 410 eignet sich besonders gut für Anwendungen mit niedrigen thermischen Aktivierungstemperaturen. Desmomelt^{®} U 410 kann als Hotmelt verwendet werden, der als Filament, Folie oder Pulver aufgetragen wird, sowie als Rohstoff für nicht vergilbende lösungsmittelbasierte Kontakt- und/oder wärmeaktivierbare Klebstoffe. Bezogen von Covestro Deutschland AG. Aus der Rezeptur kalkulierter Urethangehalt: ca. 5 Gew.% bezogen auf den Polymergehalt.

Desmomelt^{®} U 320: Aliphatischer hochmolekularer Polyester-Polyurethan-Kleberohstoff mit einem Schmelzpunkt von ca. 48°C und einem Tg von ca. -58°C nach DSC mit 20K/min. Desmomelt^{®} U 320 ist ein fester Rohstoff zur Formulierung vergilbungsfreier, thermisch aktivierbarer Klebstoffe. Desmomelt^{®} U 320 eignet sich besonders gut für Anwendungen mit niedrigen thermischen Aktivierungstemperaturen. Desmomelt^{®} U 320 kann als Hotmelt verwendet werden, der als Filament, Folie oder Pulver aufgetragen wird, sowie als Rohstoff für nicht vergilbende lösungsmittelbasierte Kontakt- und/oder wärmeaktivierbare Klebstoffe. Bezogen von Covestro Deutschland AG. Aus der Rezeptur kalkulierter Urethangehalt: ca. 5 Gew.% bezogen auf den Polymergehalt.

Desmomelt^{®} U 230: Aliphatischer hochmolekularer Polyester-Polyurethan-Kleberohstoffmit einem Schmelzpunkt von ca. 48°C und einem Tg von ca -58°C nach DSC mit 20K/min. Desmomelt^{®} U 230 ist ein fester Rohstoff zur Formulierung vergilbungsfreier, thermisch aktivierbarer Klebstoffe. Desmomelt^{®} U 230 eignet sich besonders gut für Anwendungen mit niedrigen thermischen Aktivierungstemperaturen wie z.B. in Automobilverkleidungs-, Textil-, Schuh- und Möbelanwendungen. Desmomelt^{®} U 230 kann als Hotmelt verwendet werden, der als Filament, Folie oder Pulver aufgetragen wird, sowie als Rohstoff für nicht vergilbende lösungsmittelbasierte Kontakt- und/oder wärmeaktivierbare Klebstoffe. Bezogen von Covestro Deutschland AG. Aus der Rezeptur kalkulierter Urethangehalt: ca. 5 Gew.% bezogen auf den Polymergehalt.

Desmopan^{®} 385 E Thermoplastisches Polyurethan, Polyestertyp, Shore A Härte 86, thermoplastisches Polyurethane für Anwendungen im Bereich Schläuche, Folien und technische Produkte im Bereich Softtouch, chemikalienbeständig, kratzfest, hohe kälteflexibilität, abriebfest, reißfest, verschleißfest mit einem Schmelzpunkt von ca. 180°C und einem Tg von ca. -35°C nach DSC mit 20K/min. Bezogen von Covestro Deutschland AG. Aus der Rezeptur kalkulierter Urethangehalt: ca. 11 Gew.% bezogen auf den Polymergehalt.

Desmodur^{®} 2802: Ist die wässrige Dispersion eines hydrophil modifizierten polyfunktionellen Carbodiimids mit einem nicht flüchtigen Anteil (0,5g/120min/125°C) von 37-42%, einem N=C=N-Gehalt von 0,5-1,2 mmol/g (Covestro interne Methode) und einer Viskosität bei 23°C (DIN EN ISO 3219/A.3) von 10-200 mPas. Es handelt sich um einen Vernetzer für wässrige Klebstoff- und Beschichtungssysteme. Bezogen von Covestro Deutschland AG.

Desmodur^{®} ultra DN: Hydrophiles aliphatisches Polyisocyanat auf Basis Hexamethylendiisocyanat (HDI) mit einem Isocyanatgehalt nach (ISO 11909) von 21,8 +-0,5% und einer Viskosität bei 23°C nach (ISO 3219/A.3) von 1250+-300 mPas. Desmodur^{®} ultra DN ist ein fast farbloses, flüssiges und in wässrigen Polymerdispersionen emulgierbares Polyisocyanat. Es kann als Vernetzer für kontinuierliche pH-neutrale wässrige Polymerdispersionen verwendet werden. Unter anderem für Polyurethan-, Polyvinylacetat-, Polyacrylat- sowie synthetische Kautschukdispersionen. Der Vernetzungsprozess erhöht die Beständigkeit des Klebstoffs gegen Wärme, Wasser, Weichmacher und zahlreiche andere Lösungsmittel. Bezogen von Covestro Deutschland AG

Desmodur^{®} ultra N3600: Aliphatisches Polyisocyanat (niedrigviskoses HDI-Trimerisat) mit einem Isocyanatgehalt nach ISO 11909) von 23,0 +-0,5 % und einer Viskosität bei 23°C nach ISO 3219/A.3 von 1200 +- 300 mPas. Verwendung als Härterkomponente für flexible, lichtbeständige Polyurethan-Beschichtungssysteme. Bezogen von Covestro Deutschland AG

Borchigel^{®} L75 N ist ein Polyurethan basiertes, nicht-ionisches flüssiges Rheologiehilfsmittel (Verdicker) besonders geeignet für Pinsel und Rollenapplikationen. Bezogen von BORCHERS GmbH.

### Methoden

Der Isocyanat (NCO)- bzw. Carbodiimidgehalt (NCN) wurde mittels FTIR-/ATR (Fuoriertransformation Infrarot Abgeschwächte Totalreflexion) auf einem Bruker, Tensor II mit einem ATR-Kristall aus Diamant bestimmt. Hierzu wurde das Material zu einem Film getrocknet und im direkten Anschluss, sowie nach 7 Tagen (23 °C, 50% r.F.) vermessen. Für die Isocyanatkonzentration wurde das Flächenintegral im Wellenzahlbereich 2243 - 2210 cm⁻¹ ausgewertet. Der Rest Isocyanatgehalt nach 7 Tagen (in Gew.-%) ermittelte sich wie folgt: $Rest - NCO Gehalt = \frac{Fl ä {che}_{7 Tage , 2243 - 2210 cm - 1}}{Fl ä {che}_{0 - Wert , 2243 - 2210 cm - 1}} ∗ 100 %$*.*

Der Rest NCN Gehalt nach 7 Tagen ermittelte sich auf dem Flächenintegral im Wellenzahlbereich 2150 -2093 cm⁻¹ $Rest - NCN Gehalt = \frac{Fl ä {che}_{7 Tage , 2150 - 2093 cm - 1}}{Fl ä {che}_{0 - Wert , 2150 - 2093 cm - 1}} ∗ 100 % .$

Die Spektren wurden zu Beginn grundlinienkorrigiert, sowie auf die Schwingungen der CH₂-CH₃ Banden (Wellenzahlbereich 3000 cm-1 - 2800 cm⁻¹) normiert.

### Nachweis der Vernetzung durch Messung der Löslichkeit in NMP, 23°C, 1Tag

Zur Bestimmung der Löslichkeit der Proben in NMP (N-Methyl-2-pyrrolidon) wurden 200 mg der Probe in einen Erlenmeyerkolben eingewogen. Nach Zugabe von 50 ml NMP wurde die Probe über Nacht bei Raumtemperatur gerührt. Die Löslichkeit der Probe wurde optisch bewertet. Bei gelösten Proben wurde eine viskose Flüssigkeit erhalten, wohingegen im Falle von nicht gelöste Proben gequollene Polymere im NMP vorlagen.

### Gelpunktbestimmung und Speichermodul bei 100°.C

Die Charakterisierung des Speicher (G') - und Verlustmoduls (G") in Abhängigkeit der Temperatur wurde auf einem Platte-Platte Rheometer (Fa. Anton Paar, MCR 302e mit Forced Convection Oven FCO) mit einer 25 mm Platte, bei einer Heizrate von 6 K/min und einer Frequenz von 1 Hz in einem Temperaturfenster von 50 °C - 260 °C durchgeführt. Der Gelpunkt ist die Temperatur, bei der Speicher- und Verlustmodul sich kreuzen. Der Speichermodul bei 100°C wurde aus den Kurven abgelesen.

Die Bestimmung der Glasübergangstemperatur Tg und des Schmelzpunktes Tm erfolgte via Dynamischer Differenzkalorimetrie (DSC) bei 20 K/min Heizrate in Anlehnung an DIN EN ISO 11357.

### Trennfestigkeit der Klebeverbindung (180° Peeltest) bei 23°C

Nach den verschiedenen Verfahren hergestellt verklebte PVC Prüfkörper wurden mindestens 7 Tage bei 23°C und 50% Luftfeuchtigkeit gelagert bevor von diesen bei 23°C in einem 180° Peeltest auf einer Zugprüfeinrichtung Typ ZwickiLine 1KN (Fa. Zwick/Roell, Prüfgeschwindigkeit 100mm/s, Messweg 50 mm, Breite 30 mm)) die gemittelte Zugfestigkeit aus jeweils 2 Proben (N/mm) bestimmt wurde.

### Trennfestigkeit der Klebeverbindung (180° Peeltest) bei 80°C

Nach den verschiedenen Verfahren hergestellt verklebte PVC Prüfkörper wurden mindestens 7 Tage bei 23°C und 50% Luftfeuchtigkeit gelagert bevor diese in einem Ofen für 1h auf 80°C erhitzt wurden. Die Proben wurden im Anschluss direkt nach Entnahme aus dem Ofen in einem 180° Peeltest per Hand gerissen und die Trennfestigkeit wurde als Mittel von je 2 Proben in einer Skala von 0-5 bewertet, wobei 0 einer sehr niedrigen Trennfestigkeit entspricht bei der die Proben ohne relevante Krafteinwirkung getrennt werden können und 5 nicht mit der Hand getrennt werden konnte, ohne dass das warme PVC gerissen ist.

### Klebstoffversagen

Beim Versagen des Klebstoffes unterscheidet man zwischen kohäsivem und adhäsivem Versagen. Beim kohäsiven Versagen geht die Trennnaht durch den Klebstoff, bei adhäsivem Versagen trennt sich der Klebstoff von einem Substrat.

### Herstellung von PVC Prüfkörpern mit unvernetztem Polyurethanklebstoff auf wässriger Klebstoffformulierung

Die flüssigen Klebstoffformulierungen wurden unmittelbar nach Herstellung mit einem Pinsel gleichmäßig auf je 2 Weich-PVC Streifen (20 cm x 3 cm; 30% Weichmachergehalt) aufgetragen und bei 23 °C an Raumluft getrocknet und für 7 Tage offen gelagert. Anschließend wurden die jeweils zwei Streifen bei 100 °C für 5 min in einem Umlufttrockenschrank wärmeaktiviert und bei 4 bar für 1 min verpresst. Die so erhaltenen verpressten Proben wurden für weitere mindestems 7 Tage gelagert bevor diese in einem 180° Peeltest auf einer Zugprüfeinrichtung Typ ZwickiLine 1KN (Fa. Zwick/Roell, Prüfgeschwindigkeit 100 mm/s, Messweg 50 mm, Breite 30 mm)) die gemittelte Zugfestigkeit als Mittel aus jeweils 2 Proben (N/mm) bestimmt wurde.

### Formulierung von Dispersionen mit Vernetzern

Die Herstellung der Formulierungen erfolgte durch Mischen der Polyurethandispersion sowie dem Verdicker Borchigel^{®} L75 N (20% in Wasser) in einem 100 ml Glasgefäß, das anschließend für mindestens 1h bei 200 rupm auf einem Laborschüttler Typ 3017 (Fa. GFL) homogenisiert wurde. Nach 24h Stunden wurde die Vernetzerkomponente hinzugegeben und erneut für 30 min bei 200 upm homogenisiert.

### Herstellung von PVC Prüfkörpern mit vernetzten Polyurethanklebstoff auf Basis 2K Klebstoffformulierung

Es erfolgte zunächst eine Abmischung von einer wässrigen Polyurethan Dispersion mit Desmodur^{®} DN in einem Speedmixer bei 2000 U/min und 1 min. Danach erfolgte ein Auftragen von etwa 200 g / m² der Formulierung auf PVC mit einem Pinsel. Anschließend erfolgte eine Trocknung des Klebstoffes auf dem Substrat auf einen Restwassergehalt ≤ 5%. Schließlich wurde gewartet, bis das Isocyanat im Klebstoff auf einen Wert ≤ 20% des Ursprungsgehalts gesunken ist durch Reaktionsverfolgung in ATR (Messung frisch und nach 7 Tagen).

Der vernetzte Klebstoff wurde durch Erhitzen auf 100°C aktiviert. Es folgte einzweiseitiges Verkleben (Klebstoff auf beide Substraten) bei 4bar für 1min. Die Prüfung der Festigkeit erfolgte nach Lagern von mindestens 7 Tagen bei 23°C und 50% Luftfeuchtigkeit im 180° Peeltest bei 23 °C mit einer Abzugsgeschwindigkeit von 100 mm / min.

### Bestimmung des Gelpunktes des vernetzten Polyurethanschmelzklebstoffes von gegossenen 0,5 mm dicken Filmen.

Dazu werden die fertig homogenisierten flüssigen Formulierungen in Schalen aus PTFE (Durchmesser 13 cm) mit 20 g der flüssigen Formulierung befüllt und gleichmäßig verteilt. Der flüssige Film wurde anschließend für 24 h bei 23 °C und 50 % Luftfeuchtigkeit getrocknet, anschließend noch einmal für 1 h bei 60 °C temperiert und dann für weitere 6 Tage gelagert, bevor die getrockneten Filme für die Gelpunktbestimmung im ARES Rheometer verwendet wurden. Neben G' und Gelpunkt wurden von den Filmen Proben genommen, und auf Löslichkeit in NMP geprüft (ca. 1 Gew%. Lösung in NMP, Lagerung 1 Tag bei 23°C und 50% Luftfeuchtigkeit). Quillt der Film nur an und löst sich nicht, so wird von einer erfolgreichen Vernetzung ausgegangen.

### Herstellung von Filmen aus vernetztem Polyurethanklebstoff über Mischung in einem Extruder und warmes Verpressen des pelletierten Extrudats zu ca. 0,5mm dicken Filmen.

Für die Herstellung von Filmen wurde Desmodur^{®} ultra N 3600 in verschiedenen Konzentrationen (0 Gew.%, 1 Gew.%, 1,5 Gew.%, 2 Gew.%) mit den entsprechenden Polyurethanen vom Typ Desmomelt^{®} und Desmopan^{®}) homogen vermischt. Im Anschluss wurden die Proben in einem Brabender Einwellenextruder bei Temperaturen zwischen 90°C und 140°C extrudiert. Die durch Extrusion erhaltenen Polymerstränge wurden granuliert und getrocknet. Nach 7 Tagen wurde das Granulat in einer Plattenpresse bei verschiedenen Temperaturen (siehe Tabelle X) zu Filmen verpresst (1 min Aufschmelzzeit, 20 bar Pressdruck). Es wird ein ca. 0,2 mm dicker Klebstofffilm erhalten.

Die so hergestellten Filme wurden zur Verklebung auf jeweils einen PVC Streifen gelegt und mit diesem im Ofen für 5min auf 100°C erwärmt. Nach Temperaturaktivierung wird der beschichtete PVC Streifen mit einem zweiten PVC Streifen warm verpresst (4bar 30sec). Je nachdem ob das zweite Substrat ebenfalls mit einem Film beschichtet wurde oder ohne weitere Vorbehandlung eingesetzt wurde spricht man von einer zweiseitigen oder einseitigen Verklebung. Die Trennfestigkeit wurde wie gehabt 180° Peeltest nach 7 Tage Lagerung bei 23°C und 50% Luftfeuchtigkeit ermittelt.

### Herstellung von beschichteten Prüfkörpern mit vernetzten Polyurethanklebstoff durch Extrusion von vernetzten Polyurethan Pellets auf mindestens ein Substrat

Zunächst erfolgte ein Beschichten eines Substrats (Weich-PVC Streifen (20 cm x 3 cm; 30% Weichmachergehalt)) mit dem vernetzen Polyurethanklebstoff bei einer vorgegebenen Düsentemperatur mittels 8mm Pellet-Extruder der Firma Metexon durch eine 0,4mm Extrusionsöffnung. Die Auftragsmenge Klebstoff beträgt dabei ca. 100g / qm. Anschließend erfolgte ein Verkleben des beschichteten Substrates innerhalb von 1 Minute nach Applikation wobei die Temperatur des applizierten Hotmelt Klebstoffes auf einen Wert < 100°C unterhalb der Extrusionstemperatur auf dem Substrat gesunken ist (nach IR LASER-Thermometer, ), bevor die Verklebung mit einem zweiten Substrat (ebenfalls Weich-PVC) erfolgt. Je nachdem ob das zweite Substrat ebenfalls mit vernetzten Polyurethanklebstoff durch Extrusion beschichtet wurde oder ohne weitere Vorbehandlung eingesetzt wurde spricht man von einer zweiseitigen oder einseitigen Verklebung. Es folgte eine Prüfung der Festigkeit im 180° Peeltest nach 7 Tagen Lagerung bei 23°C und 50% Luftfeuchtigkeit.

### Ergebnisse

Erfindungsgemäße Versuche sind mit * gekennzeichnet

**Tabelle 1:**

| **Dispercoll^{®} U 2682** | | | |
|---|---|---|---|
| **Beschichtung aus wässriger 2K Formulierung** | **1** | **2*** | **3*** |
| Dispercoll^{®} U 2682 | 100 | 100 | 100 |
| Desmodur^{®} DN | 0 | 2 | 4 |
| Borchigel^{®} L75 20 Gew.% in Wasser | 1 | 1 | 1 |
| Vernetzer Konzentration ATRnach 7T, 23°C / Gew.-% | 0 | 5 | 7 |

| **Test an Film** | | | |
|---|---|---|---|
| Gelpunkt / °C (tan d =1) | 78 | 103 | 117 |
| G' bei 100 °C / kPa | 9 | 33 | 76 |
| Löslichkeit in NMP | ja | nein | nein |

| **Verklebung** | | | |
|---|---|---|---|
| Applikation | zweiseitig | zweiseitig | zweiseitig |
| Aktivierungstemperatur °C | 100 | 100 | 100 |
| Trennfestigkeit (180° Peeltest) (23°C) N/mm | 18,6 | 4,4 | 5,8 |
| Trennfestigkeit (180° Peeltest) bei 80°C (Bewertung) | 0.5 | 1.5 | 2 |
| Versagen | kohäsiv | kohäsiv | kohäsiv |

| | | | |
|---|---|---|---|
| Formulierung 1 ist auf Basis eines unvernetzten Polyurethans. | | | |

**Tabelle 2:**

| **Dispercoll^{®} U 56** | | | |
|---|---|---|---|
| **Beschichtung aus wässriger 2K Formulierung** | **4** | **5*** | **6** |
| Dispercoll^{®} U 56 | 100 | 100 | 100 |
| Desmodur^{®} DN | 0 | 2 | 4 |
| Borchigel^{®} L75 20 Gew.% in Wasser | 1 | 1 | 1 |
| Vernetzer Konzentration ATR nach 7T, 23°C / Gew.-% | 0 | 7 | 4 |

| **Test an Film** | | | |
|---|---|---|---|
| Gelpunkt / °C | 108 | 227 | > 260 |
| G' bei 100°C / kPa | 64 | 161 | 239 |
| Löslichkeit NMP | ja | nein | nein |

| **Verklebung** | | | |
|---|---|---|---|
| Applikation | zweiseitig | zweiseitig | zweiseitig |
| Aktivierungstemperatur °C | 100 | 100 | 100 |
| Trennfestigkeit (180° Peeltest 23°C N/mm | PVC gerissen | 3,7 | 2,9 |
| Trennfestigkeit (180° Peeltest) bei 80°C (Bewertung) | 1 | 2 | 1 |
| Versagen | kohäsiv | kohäsiv | kohäsiv |

| | | | |
|---|---|---|---|
| Formulierung 4 ist auf Basis eines unvernetzten Polyurethans, Formulierung 6 ist übervernetzt und zeigt einen Gelpunkt > 260°C, so dass die Endfestigkeit bei erhöhter Temperatur wieder abnimmt. | | | |

**Tabelle 3:**

| **Dispercoll^{®} U XP 2824** | | |
|---|---|---|
| **Beschichtung aus wässriger 2K Formulierung** | **7** | **8*** |
| Dispercoll^{®} U XP 2824 | 100 | 100 |
| Desmodur^{®} XP 2802 | 0 | 3 |
| Borchigel^{®} L75 20 Gew.% in Wasser | 1 | 1 |
| Vernetzer Konzentration ATR nach 7T, 23°C / Gew.-% | 0 | 22 |

| **Test an Film** | | |
|---|---|---|
| Gelpunkt / °C | 63 | 146 |
| G' at 100°C / kPa | 5 | 41 |
| Löslichkeit NMP | ja | nein |

| **Verklebung** | | |
|---|---|---|
| Applikation | zweiseitig | zweiseitig |
| Aktivierungstemperatur °C | 100 | 100 |
| Trennfestigkeit (180° Peeltest) bei 23°C N/mm | PVC gerissen | 5,8 |
| Trennfestigkeit (180° Peeltest bei 80°C (Bewertung) | 1 | 3 |
| Versagen | kohäsiv | kohäsiv |

| | | |
|---|---|---|
| Formulierung 7 ist auf Basis eines unvernetzten Polyurethans. | | |

**Tabelle 4:**

| **Dispercoll^{®} U XP 2643** | | |
|---|---|---|
| **Beschichtung aus wässriger 2K Formulierung** | **9** | **10** |
| Dispercoll^{®} U XP 2643 | 100 | 100 |
| Desmodur^{®} XP 2802 | 0 | 3 |
| Borchigel^{®} L75 20 Gew.% in Wasser | 1 | 1 |
| Vernetzer Konzentration ATR nach 7T, 23°C / Gew.-% | 0 | 27 |

| **Test an Film** | | |
|---|---|---|
| Gelpunkt / °C | 103 | 157 |
| G' bei 100°C / kPa | 41 | 144 |
| Löslichkeit NMP | ja | nein |

| **Verklebung** | | |
|---|---|---|
| Applikation | zweiseitig | zweiseitig |
| Aktivierungstemperatur °C | 100 | 100 |
| Trennfestigkeit (180° Peeltest) bei 23°C N/mm | 0,2 | 0,2 |
| Trennfestigkeit (180° Peeltest bei 80°C (Bewertung) | 0 | 0 |
| Versagen | kohäsiv | kohäsiv |

| | | |
|---|---|---|
| Formulierung 9-10 sind basierend auf einem bei 23°C amorphen Polyurethanpolymer ohne Schmelzpunkt. | | |

**Tabelle 5:**

| **Desmomelt^{®} U 410** | | | |
|---|---|---|---|
| **Beschichtung mit vernetztem Film** | 11 | 12* | 13* |
| Desmomelt^{®} U 410 | 100 | 100 | 100 |
| Desmodur^{®} Ultra N3600 | 0 | 1.5 | 2 |
| Vernetzer Konzentration ATR nach 7T, 23°C / Gew.-% | 0 | 0 | 0 |

| **Test an Film** | | | |
|---|---|---|---|
| Gelpunkt / °C | 60 | 112 | 220 |
| G' bei 100°C / °C | 12 | 77 | 116 |
| Löslichkeit NMP | ja | nein | nein |

| **Verklebung** | | | |
|---|---|---|---|
| Applikation | Extrusion einseitig | Extrusion einseitig | Extrusion einseitig |
| Extrusionstemperatur °C | 240 | 255 | 255 |
| Trennfestigkeit (180° Peeltest) bei 23°C N/mm | 12,7 | 16,8 | 17,5 |
| Trennfestigkeit (180° Peeltest bei 80°C (Bewertung) | 1 | 2 | 3 |
| Versagen | kohäsiv | kohäsiv | kohäsiv |
| Film Presstemperatur °C | 80 | 160 | 200 |
| Applikation | Film | Film | Film |
| Aktivierungstemperatur °C | 100 | 100 | 100 |
| Festigkeit N/mm | PVC gerissen | PVC gerissen | PVC gerissen |
| Trennfestigkeit bei 80°C | 1 | 2 | 3 |
| Versagen | kohäsiv | kohäsiv | kohäsiv |

| | | | |
|---|---|---|---|
| Formulierung 11 ist auf Basis eines unvernetzten Polyurethans. | | | |

**Tabelle 6:**

| **Desmomelt^{®} U 320** | | | | |
|---|---|---|---|---|
| **Beschichtung durch Extrusion** | **14** | **15*** | **16*** | **17** |
| Desmomelt^{®} U 320 | 100 | 100 | 100 | 100 |
| Desmodur^{®} Ultra N3600 | 0 | 1 | 1.5 | 2 |
| Vernetzer Konzentration ATRnach 7T 23°C / % | 0 | 0 | 0 | 0 |

| **Test an Film** | | | | |
|---|---|---|---|---|
| Gelpunkt / °C | 75 | 200 | 250 | >260 |
| G' bei 100°C / kPa | 30 | 80 | 76 | 95 |
| Löslichkeit NMP | ja | nein | nein | nein |

| **Verklebung** | | | | |
|---|---|---|---|---|
| Applikation | Extrusion einseitig | Extrusion einseitig | Extrusion einseitig | Extrusion einseitig |
| Extrusionstemperatur °C | 260 | 260 | 260 | 260 |
| Trennfestigkeit (180° Peeltest) bei 23°C N/mm | 22,5 | 16,5 | 7,6 | 5,4 |
| Trennfestigkeit (180° Peeltest) bei 80°C (Bewertung) | 1 | 2 | 3 | 1 |
| Versagen | kohäsiv | kohäsiv | kohäsiv | kohäsiv |

| | | | | |
|---|---|---|---|---|
| Formulierung 14 ist auf Basis eines unvernetzten Polyurethans. Formulierung 17 ist übervernetzt. | | | | |

**Tabelle 7:**

| **Desmomelt^{®} U 230** | | | | |
|---|---|---|---|---|
| **Beschichtung mit vernetztem Film** | **18** | **19*** | **20*** | **21*** |
| Desmomelt^{®} U 230 | 100 | 100 | 100 | 100 |
| Desmodur^{®} Ultra N3600 | 0 | 1 | 1.5 | 2 |
| Vernetzer Konzentration ATRnach 7T, 23°C / % | 0 | 0 | 0 | 0 |

| **Test an Film** | | | | |
|---|---|---|---|---|
| Gelpunkt / °C | 115 | 220 | 230 | 240 |
| G' bei 100°C / kPa | 104 | 252 | 281 | 344 |
| Löslichkeit NMP | ja | nein | nein | nein |

| **Verklebung** | | | | |
|---|---|---|---|---|
| Applikation | Extrusion einseitig | Extrusion einseitig | Extrusion einseitig | Extrusion einseitig |
| Extrusionstemperatur °C | 250 | 255 | 265 | 265 |
| Trennfestigkeit (180° Peeltest) bei 23°C N/mm | 13,9 | 15,1 | 10,0 | 11,3 |
| Trennfestigkeit (180° Peeltest) bei 80°C Bewertung | 2 | 3 | 3 | 4 |
| Versagen | kohäsiv | kohäsiv | adhäsiv | adhäsiv |
| Film Presstemperatur °C | 200 | 200 | 210 | 210 |
| Applikation | Film | Film | Film | Film |
| Aktivierungstemperatur °C | 100 | 100 | 100 | 100 |
| Trennfestigkeit (180° Peeltest) bei 23°C N/mm | 10,0 | 9,5 | 7,8 | 5,5 |
| Trennfestigkeit (180° Peeltest bei 80°C (Bewertung) | 2 | 5 | 4 | 3 |
| Versagen | adhäsiv | PVC gerissen | adhäsiv | adhäsiv |

| | | | | |
|---|---|---|---|---|
| Formulierung 18 ist auf Basis eines unvernetzten Polyurethans. | | | | |

**Tabelle 8:**

| **Desmopan^{®} 385** | | | | |
|---|---|---|---|---|
| **Beschichtung durch Extrusion** | **22** | **23** | **24** | **25** |
| Desmopan^{®} 385 E | 100 | 100 | 100 | 100 |
| Desmodur^{®} Ultra N3600 | 0 | 1 | 1.5 | 2 |
| Vernetzer Konzentration ATRnach 7T 23°C / % | 0 | 0 | 0 | 0 |

| **Test an Film** | | | | |
|---|---|---|---|---|
| Gelpunkt / °C | 180 | 180 | 190 | 210 |
| G' bei 100°C / kPa | 1696 | 1011 | 652 | 918 |
| Löslichkeit NMP | ja | ja | ja | nein |

| **Verklebung** | | | | |
|---|---|---|---|---|
| Applikation | Extrusion einseitig | Extrusion einseitig | Extrusion einseitig | Extrusion einseitig |
| Extrusionstemperatur °C | 240 | 250 | 250 | 250 |
| Trennfestigkeit (180° Peeltest) bei 23°C N/mm | 0,8 | 0,4 | 0,6 | 0,3 |
| Trennfestigkeit (180° Peeltest) bei 80°C (Bewertung) | 0 | 0 | 0 | 0 |
| Versagen | einseitig | einseitig | einseitig | einseitig |
| Film Presstemperatur °C | 200 | 200 | 200 | 200 |
| Applikation | Film | Film | Film | Film |
| Aktivierungstemperatur °C | 100 | 100 | 100 | 100 |
| Trennfestigkeit (180° Peeltest) bei 23°C N/mm | 0,3 | 0,1 | 0,2 | 0,1 |
| Trennfestigkeit (180° Peeltest bei 80°C (Bewertung) | 0 | 0 | 0 | 0 |
| Versagen | adhäsiv | adhäsiv | adhäsiv | adhäsiv |

| | | | | |
|---|---|---|---|---|
| Formulierung 22-25 ist auf Basis eines Polyurethans mit einem Schmelzpunkt > 150°C. | | | | |

Die Daten zeigen, dass mit dem erfindungsgemäßen Verfahren, bei dem der Polyurethan-Klebstoff vor dem Verkleben vernetzt wird, ein Verbundmaterial mit guter Trennfestigkeit bei 23°C sowie gegenüber einem Verfahren unter Einsatz unvernetzter Polyurethan-Klebstoffe eine verbesserte Trennfestigkeit bei Temperaturen oberhalb des Schmelzpunkts erreicht wird.

Die verbesserten Eigenschaften werden sowohl erreicht, wenn eine Polyurethan-Dispersion eingesetzt wird (Tabellen 1 bis 3) als auch, wenn ein festes Polyurethan verwendet wird (Tabellen 5 bis 7). Dabei ist es wichtig, dass das Polyurethan einen Schmelzpunkt besitzt, also nicht amorph ist (Tabelle 4), weil mit amorphen Polyurethanen keine ausreichenden Trennfestigkeiten trotz Einsatz einer Vemetzerkomponente erreicht werden. Weiterhin darf der Schmelzpunkt des Polyurethans nicht zu hoch liegen (Tabelle 8), weil dann trotz Vernetzung keine guten Trennfestigkeiten bei höheren Temperaturen erreicht werden. Wenn der Gelpunkt über 260 °C liegt, wird auch keine gute Trennfestigkeit erhalten (Bsp. 6 und 17).

## Patentansprüche

1. Verfahren zur Herstellung von verklebten Verbundmaterialien mit erhöhter Temperaturbeständigkeit **dadurch gekennzeichnet, dass** a) ein thermoplastisches Polyurethan mit einem Schmelzpunkt Tₘ bestimmt mittels Dynamischer Differenzkalorimetrie ≥ 40°C und ≤ 150°C und einem Glasübergangspunkt T_{g} bestimmt mittels Dynamischer Differenzkalorimetrie < 0°C als Klebstoff eingesetzt wird und b) dieser Klebstoff vor der Verklebung durch eine chemische Reaktion zu einem vernetztem Polyurethanschmelzklebstoff umgesetzt wird und wobei der vernetzte Polyurethanschmelzklebstoff einen Gelpunkt ermittelt nach der in der Beschreibung dargestellten Methode von höchstens 260 °C aufweist.

2. Verfahren gemäß Anspruch 1, wobei zur Vernetzung des thermoplastischen Polyurethans eine Vernetzerkomponente eingesetzt wird wobei die Vemetzerkomponente ausgewählt ist aus der Gruppe der Polyisocyanate, Polyepoxide, Carbodiimide, Polyaziridine, radikalisch härtende Vernetzer, Polyanhydride und Polyamine.

3. Verfahren gemäß Anspruch 2, wobei die Vemetzerkomponente vor der Verklebung zu ≥ 70% abreagiert hat.

4. Verfahren nach einem der vorhergehenden Ansprüche, wobei zumindest eines der zu verklebenden Substrate mit einem vernetzten Polyurethanschmelzklebstoff wie in Anspruch 1 hergestellt vorbeschichtet ist.

5. Verfahren nach Anspruch 4, wobei die Vorbeschichtung des mindestens einen Substrates mit einem thermoplastischen Polyurethanschmelzklebstoff erfolgt, der entweder auf dem Substrat vernetzt wird oder vor der Beschichtung schon vernetzt war.

6. Verfahren nach einem der vorhergehenden Ansprüche, wobei der vernetzte Polyurethanschmelzklebstoff einen Gelpunkt ermittelt nach der in der Beschreibung dargestellten Methode von ≥ 10°C, bevorzugt ≥ 20°C, besonders bevorzugt ≥ 30°C oberhalb des Gelpunktes des entsprechenden unvernetzten Polyurethanschmelzklebstoffs aufweist.

7. Verfahren gemäß einem der vorhergehenden Ansprüche, wobei der vernetzte Polyurethanschmelzklebstoff einen Gelpunkt ermittelt nach der in der Beschreibung dargestellten Methode von mindestens 100°C aufweist.

8. Verfahren gemäß einem der vorhergehenden Ansprüche, wobei der vernetzte Polyurethanschmelzklebstoff bei 23°C innerhalb eines Tages nicht vollständig löslich in N-Methly-2-pyrrolidon ist.

9. Verfahren nach einem der vorhergehenden Ansprüche, wobei der vernetzte thermoplastische Polyurethanschmelzklebstoff bei 50°C oberhalb seines Schmelzpunktes, einer Frequenz von 1Hz und einer Amplitude von 1% in Scherung gemessen ein Speichermodul G' bestimmt mittels eines Platte-Platte Rheometers von ≥ 20 kPa aufweist.

10. Verfahren nach einem der vorhergehenden Ansprüche, wobei der thermoplastische Polyurethanklebstoff in Form einer Dispersion, Lösung, Lösungsmitteldispersion, Schmelze, Pulver oder aus der Schmelze enthaltend mindestens eine vernetzende Komponente auf mindestens einem Substrat aufgetragen wird und auf diesem vor der Verklebung vernetzt.

11. Verfahren nach einem der vorhergehenden Ansprüche, wobei der vernetzte thermoplastische Polyurethanschmelzklebstoff einen Gewichtsprozentanteil an Polyurethangruppen -O-C(O)-NH- von ≥ 1 Gew.% und ≤ 10 Gew.% in aufweist.

12. Verfahren nach einem der vorhergehenden Ansprüche, wobei der vernetzte Polyurethanschmelzklebstoff für eine Verklebung unter Druck auf eine Temperatur unterhalb des Gelpunktes, bevorzugt ≤ 30°C unterhalb des Gelpunktes, erhitzt wird.

13. Verfahren gemäß einem der vorhergehenden Ansprüche, wobei der vernetzte Polyurethanschmelzklebstoff folgende Komponenten enthält:
a) Zu 30%-99,5 Gew.% Polyurethane mit einem Urethangruppengehalt (NCOOC) ≥0,5 Gew. % und ≤10%, einem Ureagehalt (NCON) von 0- 5 Gew. %, einem Estergruppengehalt (COOC) von 1-30 Gew. % und einen Isocyanuratgruppengehalt (NCO)s von 0-5 Gew. % und einen Si Gehalt von 0-3 Gew. %.
b) Zu 0-50 Gew.% polymere organische nicht-Polyurethanverbindungen mit einem Tg zwischen -70°C und 100°C und bevorzugt mit einem Schmelzpunkt zwischen 30°C und 150°C.
c) Zu 0-30 Gew.% Weichmacher mit einem Tg ≤ 10°C und einem Molekulargewicht Mn nach GPC ≤ 20000 g/mol gegen Polystyrol Standards in THF gemessen.
d) Zu 0,1-5 Gew. % Wasser
e) Zu 0-40 Gew. % anorganische Füllstoffe und / oder Pigmente
f) Zu 0-10 Gew. % organische und / oder anorganische Verdicker
g) Zu 0-5 Gew. % flüchtige organische Verbindungen mit einem Siedepunkt ≤ 250°C

14. Verklebtes Verbundmaterial erhältlich nach Verfahren gemäß einem der vorhergehenden Ansprüche.

15. Verklebtes Verbundmaterial nach Anspruch 14., wobei der erfindungsgemäße vernetzte Polyurethanschmelzklebstoff nach Aktivierung und Verpressen eine verbesserte Temperaturbeständigkeit der Klebeverbindung nach Lagern von mindestens 7 Tagen bei 23°C verglichen mit dem unvernetzten Polyurethanschmelzklebstoff aufweist und wobei der Gelpunkt mindestens ≥ 10°C oberhalb des Gelpunktes des unvernetzten Polyurethanschmelzklebstoffes liegt.
